# EUROPEAN PATENT SPECIFICATION

(11) **EP 3 638 630 B1**
(45) Date of publication and mention of the grant of the patent: **07.06.2023**
(21) Application number: 17913325.1
(22) Date of filing: 13.06.2017
(51) Int. Cl.: C02F 11/148, C02F 1/72

(54) **METHOD FOR TREATING SLUDGE**
VERFAHREN ZUR BEHANDLUNG VON SCHLAMM
PROCÉDÉ DE TRAITEMENT DE BOUES

(43) Date of publication of application: 22.04.2020
(73) Proprietor: Kemira Oyj, 00180 Helsinki (FI)
(72) Inventor: RECKTENWALD, Michael, FI-02230 Espoo (FI); WU, Suhua, Shanghai 201112 (CN); LI, Ping, Shanghai 201112 (CN)
(74) Representative: AWA Sweden AB
(86) International application number: PCT/CN2017/087993
(87) International publication number: WO 2018/227356

(56) References cited:
- WO-A1-94/02424
- WO-A1-2004/094320
- WO-A1-2013/044616
- WO-A1-2014/012865
- CN-A- 102 690 040
- CN-A- 105 236 701
- CN-A- 105 502 883
- CN-A- 105 645 637
- JP-A- S5 759 700
- US-A- 4 221 661
- US-A1- 2005 077 245

## Description

### Field of the invention

The present invention relates to a method of treating sludge in order to improve dewatering of the sludge.

### Background

Sludge may be obtained from different applications. Wastewater treatment plants may receive municipal and/or industrial wastewaters. During the wastewater treatments sludges are obtained. Depending on the amount of treatments performed and type of incoming wastewater the obtained sludges may be more or less difficult to process further. The sludge obtained may not always be an asset so ways to decrease the amount of sludge is attractive. Sludge may need to be incinerated or put on landfill sites. However, this may be costly in view of large volumes to handle, e.g. in view of transport costs, large areas needed for deposits or low incineration efficiency.

Sludge dewatering is the separation of a liquid and solid phase whereby, generally, the least possible residual moisture is required in the solid phase for the reason that the residual moisture in the dewatered solids determines the disposal costs. Current main sludge dewatering solutions are mainly based on chemical conditioning of sludge followed by physical based equipment treatment.

In some applications and/or countries dewatering of sludge is improved by addition of mineral additives (skeleton builders), such as lime, gypsum, ash, red mud or cement at very high dosages. Such additives are added as mineral filtration aids. The upside of addition of such compounds is that it increases the dry solids (DS) content of the final sludge dramatically, especially with lime, as lime reacts in contact with water and increases in volume. However, the downside is that the total amount of dewatered sludge cake to handle further has increased drastically, resulting in high handling costs of the voluminous sludge cake. Thus, an improved dewatering does not always provide a good overall economical solution.

Thus, there is a need to further improve the dewatering of sludges and avoid or decrease the use of skeleton builders. An important advantage for dewatering processes lies in reduced sludge disposal costs associated with producing a drier dewatered sludge cake.

WO 2014/012865 A1 discloses a method of treating a slurry comprising a digestate from a biogas plant, which biogas plant is fed a feedstock comprising about 50 to 100 weight-% of products and wastes from farms, and/or food and beverage handling.

CN 105 502 883 A discloses a method for providing oxidation coupling polymer to condition municipality sludge.

CN 102 690 040 A discloses a process for treating municipal sludge to improve its dewatering with a catalyst and a radical initiator.

### Summary of the invention

The present invention relates to a method of treating municipal and/or industrial sludge comprising the steps of:
a) providing the sludge, which has a pH of at least 6;
b) adding a catalyst consisting of a metal salt of copper(II) to said sludge;
c) adding a radical initiator in the form of sodium persulfate to said sludge;
d) adding a polymer to said sludge to provide a chemically treated sludge;
e) dewatering said chemically treated sludge in at least one stage to provide a dewatered sludge cake,
wherein step c) is performed before step b).

In one embodiment not forming part of the invention the catalyst may be selected from metals salts of the group consisting of salts of iron, manganese, titanium, cobalt, aluminium, and cerium, and any combination thereof, preferably selected from the group consisting of salts of , ferrous and ferric iron.

In one embodiment not forming part of the invention the metals salts may be selected from the group chlorides, sulfates and oxides, and any combination thereof.

In one embodiment not forming part of the invention the metals salts may be selected from the group consisting of iron sulfate, iron chloride, iron oxide, cobalt chloride, manganese oxide, titanium oxide, aluminium oxide, cerium oxide, and any combination thereof.

In one embodiment of the invention the metals salts of copper(II) may be selected from the group consisting of copper chloride or copper sulfate.

In one embodiment the catalyst may be provided to the sludge in an amount of 10-120 kg per tonne of sludge dry solids (kg/tDS), preferably 20-80 kg/tDS, preferably 30-50 kg/tDS.

In one embodiment not forming part of the invention the radical initiator may be selected from the group hydrogen peroxide, sodium percarbonate and sodium perborate, and any combination thereof.

In one embodiment, not forming part of the invention, when the radical initiator is hydrogen peroxide, step b) may be performed before step c).

According to the invention step c) is performed before step b).

In one embodiment the radical initiator may be added to the sludge in an amount of at most 200 kg per tonne of sludge dry solids (kg/tDS), preferably 5-150 kg/tDS.

In one embodiment the polymer may be an anionic, cationic or nonionic polymer. It may be selected from the group polyacrylamide, polyamine, polyDADMAC, melamine formaldehydes, natural polymers, such as tannins and lignin, natural polysaccharides, such as starch, cellulose, hemicellulose alginate, guar gum, pectin, chitin and chitosan, and cationic or anionic derivatives thereof, and any combination thereof. For example, the compounds may be selected from polyacrylamide, polyamine and polyDADMAC, and any combination thereof.

In one embodiment polyacrylamide may have a standard viscosity of at least 2 mPa·s measured at 0.1 weight-% solids content in an aqueous NaCl solution (1 M), at 25°C, using Brookfield DVII T viscometer with UL adapter.

In one embodiment the polymer may be added to the sludge in an amount of 0.5-10 kg per tonne of sludge dry solids (kg/tDS), such as 0.75-6 kg/tDS, 1-4 kg/tDS, or 1-3 kg/tDS.

In one embodiment the method may further comprise providing a defoamer to the sludge before step d) and after steps b) and c), preferably selected from the groups silicone fluid (polysiloxane) defoamers or modified silicone fluid defoamers or silicone compound defoamers.

In one embodiment step e) may be performed by a separation selected from sedimentation, flotation, pressing, centrifugation and filtration, and any combination thereof, preferably by using a device selected from the group consisting of decanter centrifuge, rotary screen, belt press, filter press, disc filter press, screw press.

In one embodiment the dewatered sludge cake may have dry solids content (DS) of at least 30 wt%, such as at least 40 wt% DS.

In one embodiment the sludge to be treated may be from wastewater purification.

In one embodiment the sludge to be treated may be selected from undigested sludge, digested sludge, chemically treated sludge, and dewatered sludge, and any combination thereof. This incoming sludge has a pH of at least 6.

In one embodiment the sludge of step a) has a pH of 6-8.5, such as pH 6-8, or pH 6.5-8.

### Short description of the drawings

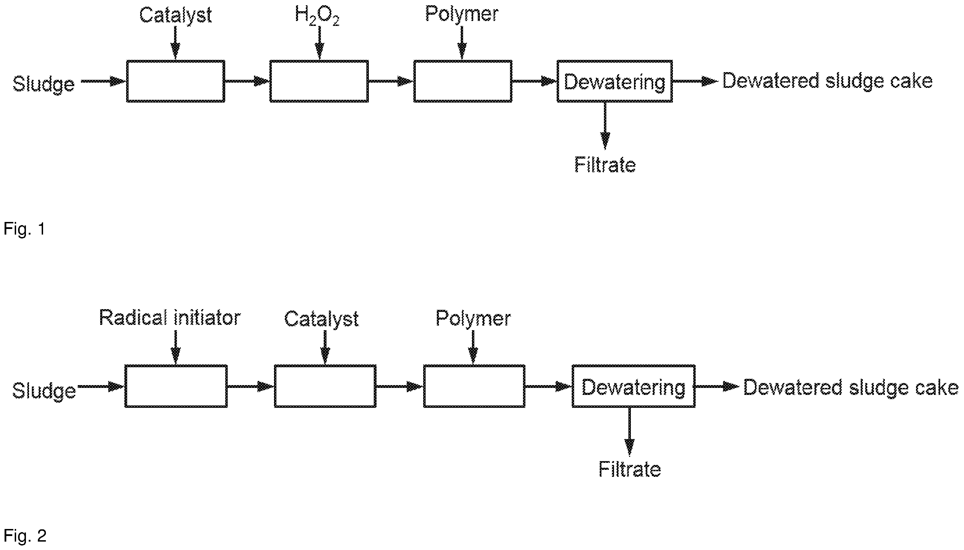

Figure 1 shows an embodiment not forming part of the invention.
Figure 2. shows a schematic drawing of an embodiment of the method according to the invention for sludge treatment using catalyst and radical initiator treatment, flocculation by polymer and dewatering of the treated sludge.

### Detailed description

The present invention relates to a method of treating municipal and/or industrial sludge comprising the steps of:
a) providing the sludge, which has a pH of at least 6;
b) adding a catalyst consisting of a metal salt of copper(II) to said sludge;
c) adding a radical initiator in the form of sodium persulfate to said sludge;
d) adding a polymer to said sludge to provide a chemically treated sludge;
e) dewatering said chemically treated sludge in at least one stage to provide a dewatered sludge cake;
wherein step c) is performed before step b).

The present method is used to condition incoming sludge in stages before dewatering. The chemicals used are added in a sequence.

Not forming part of the invention, but solely to enhance the understanding of the invention, it should be understood that the catalyst may be selected from metals salts of the group consisting of salts of iron, cobalt, manganese, titanium, aluminium, and cerium, and any combination thereof. Examples of catalysts which are usable may be selected from the group consisting of salts of ferrous and ferric iron.

Solely as an example, the present metals salts may be selected from different types, e.g. the group consisting of chlorides, sulfates and oxides, and any combination thereof.

The amount of catalyst added may naturally vary, but the catalyst may be provided to the sludge in an amount of 10-120 kg per tonne of sludge dry solids (kg/tDS), such as 20-80 kg/tDS, or 30-50 kg/tDS.

The catalyst may be mixed with the sludge of a time period of about 0.5-30 min, such as about 1-15 min, about 2-5 min, or about 5-10 min.

Also, it is to be noted that some catalysts may also function as coagulants. However, not all catalysts may have that ability.

The present process also includes addition of a radical initiator. An important role of radical initiators suitable for the present method is that they are able to form into radicals. They are a source of radicals. The formation of radicals is an important step for the present method. The radical initiator may also be capable of oxidizing material, i.e. it may act as an oxidant.

Certain metal ions, as present catalysts, cause decomposition with formation of free radicals, such as (HO•) and (HOO•) being formed. Only as an example, hydroxyl radicals (•OH) are e.g. formed from the reaction (I):

Fe²⁺ + H₂O₂ → Fe³⁺ + •OH + OH⁻ (I).

Solely, as a further example, superoxide radicals (HOO•) are e.g. formed from the reaction (II):

Fe³⁺ + H₂O₂ → Fe²⁺ + HOO• + H⁺ (II).

The radicals have very high redox potential, which is then utilized to rupture the cell and release the intracellular water.

Percompounds, such as those including sulfates, may be used as radical initiators.

Sulfate radicals (SO₄⁻•) are e.g. formed through the reaction (III):

S₂O₈²⁻ + Mn⁺ → M⁽ⁿ⁺¹⁾⁺ + SO₄⁻• + SO₄²⁻ (III).

The sulfate radicals (SO₄⁻•) have an even higher redox potential estimated to be 2.60V, similar to that of hydroxyl radical (•OH, 2.70V), which is then utilized to rupture the cell and release the intracellular water.

Solely as an example and not forming part of the invention, the radical initiator may be selected from the group consisting of hydrogen peroxide, sodium percarbonate, and sodium perborate, and any combination thereof.

As the radical initiator is added before the catalyst, the radical initiator may be provided as a solid. Solely as an example, if the radical initiator is a percompound it may be provided to the sludge as solids. Thus, e.g. sodium persulfate may be provided in solid form to the sludge being treated.

Solely as an example, not forming part of the invention, if hydrogen peroxide is used as radical initiator, no acidification is performed on the incoming sludge before addition of radical initiator and catalyst. Then it is preferred to use FeCl₃ and/or CuCl₂ as catalyst, which preferably is added before the hydrogen peroxide to the sludge.

As sodium persulfate is used as radical initiator, no acidification is performed on the incoming sludge before addition of radical initiator and catalyst.

The radical initiator may be added to the sludge in an amount of at most 200 kg per tonne of sludge dry solids (kg/tDS), such as about 5-150 kg/tDS.

As an example, not forming part of the invention, when the radical initiator is hydrogen peroxide, it may be added to the sludge in an amount of 5-80 kg per tonne of sludge dry solids (kg/tDS), such as 10-60 kg/tDS, or 20-35 kg/tDS. It is preferable to keep the hydrogen peroxide amount within the present ranges as overdosing may provide a risk of foam forming which is undesirable.

As an example, when the radical initiator is a percompound, e.g. sodium persulfate, it may be added to the sludge in an amount of 20-150 kg per tonne of sludge dry solids (kg/tDS), such as 30-120 kg/tDS, or 50-150 kg/tDS.

The radical initiator may be mixed with the sludge of a time period of about 0.5-30 min, such as about 1-15 min, about 2-5 min, or about 5-10 min.

The polymer that is provided in step d) may be an anionic, a cationic or a nonionic polymer. Many different types of polymers may be used in the present process, and such may be selected from the group polyacrylamide, polyamine, polyDADMAC, melamine formaldehydes, natural polymers, such as tannins and lignin, natural polysaccharides, such as starch, cellulose, hemicellulose alginate, guar gum, pectin, chitin and chitosan, and cationic or anionic derivatives thereof, and any combination thereof. For example, the compounds may be selected from polyacrylamide, polyamine and polyDADMAC, and any combination thereof.

The polymer may have a high molecular weight. The molecular weight may be defined in terms of the standard viscosity (SV), e.g. herein measured at 0.1 weight-% solids content in an aqueous NaCl solution (1 M), at 25°C, using Brookfield DVII T viscometer with UL adapter. If the polymer is polyacrylamide, it may have a SV of at least 2 mPa s, such as above 2 mPa s, about 2-9 mPa s, about 2.2-8 mPa s, or about 2.5-7 mPa s, measured at 0.1 weight-% solids content in an aqueous NaCl solution (1 M), at 25°C, using Brookfield DVII T viscometer with UL adapter. In preferred embodiments the polymer may be selected from linear or structured dry polyacrylamides with a standard viscosity of >2 mPa s, measured at 0.1 weight-% solids content in an aqueous NaCl solution (1 M), at 25°C, using Brookfield DVII T viscometer with UL adapter; linear or structured emulsion polyacrylamides with a standard viscosity of >2 mPa s, measured at 0.1 weight-% solids content in an aqueous NaCl solution (1 M), at 25°C, using Brookfield DVII T viscometer with UL adapter; polydiallyldimethylammonium chlorides (poly-DADMACs); and poly-amines. The polyamines may have a molecular weight of about 10 000 to about 500 000 Da, preferably about 10 000 to about 300 000 Da. The polyDADMACs may have a molecular weight of about 100 000 to about 500 000 Da, preferably about 100 000 to about 300 000 Da. The polyamines or polyDADMACs may be selected from anionic, nonionic and cationic polymers, and any combination thereof. Preferably the polymer is selected from the group cationic polyamine and cationic polydiallyldimethylammonium chloride (polyDADMAC), and any combination.

The polymer may be added to the sludge in an amount of 0.5-10 kg per tonne of sludge dry solids (kg/tDS), such as about 0.75-6 kg/tDS, about 1-4 kg/tDS, or about 1-3 kg/tDS. These amounts are in view of total solids of the polymer used.

The polymer may be mixed with the sludge of a time period of about 1 second to 10 min, such as about 1-5 seconds, about 0.2-1 min, or about 5-10 min.

If the incoming sludge of the process is municipal sludge the use of cationic polymers may be preferred. If the incoming sludge is industrial sludge the use of anionic polymers may be preferred.

The present method may further comprise providing a defoamer to the sludge before step d) and after steps b) and c). The defoamer may be selected from the groups silicone fluid (polysiloxane) defoamers or modified silicone fluid defoamers, or silicone compound.

Step e) may be performed by a separation selected from sedimentation, flotation, pressing, centrifugation and filtration, and any combination thereof, preferably by using a device selected from the group consisting of decanter centrifuge, rotary screen, belt press, filter press, disc filter press, screw press.

The dewatered sludge cake obtained in step e) may have dry solids content (DS) of at least 30 wt%, such as at least 40 wt% DS.

The incoming sludge of the present process may be obtained from wastewater treatment. The incoming sludge may be obtained from one wastewater treatment step or a mixture of several wastewater treatment steps. The incoming sludge to be treated with the present process may be selected from undigested sludge, digested sludge, chemically treated sludge, and dewatered sludge, and any combination thereof. Combinations of the above mentioned sludges may be used, so if the sludge to be treated is dewatered sludge it may have been treated with polymer before said dewatering to improve a subsequent dewatering. Addition of polymer to the sludge is considered providing a chemically treated sludge which then is dewatered, which provides a chemically treated dewatered sludge. If the incoming sludge is a dewatered sludge it may be provided as a thickened sludge or a sludge cake with fairly high water content.

The incoming sludge, i.e. the sludge of step a) may have a pH of about 6-8.5, such as pH of about 6-8, about 6.5-8, or about 7-8.

Municipal sludge entering the present process may have a pH slightly below 7. Incoming industrial sludge may have a pH slightly above 7.

### Examples

### Sludge conditioning with catalyst first

The following example is only for providing understanding of the invention and does not form part of the invention. A beaker was provided with 220 g sludge. The sludge was subjected to rapid mixing of about 300 rpm. A calculated amount of catalyst was added, and followed by mixing for 2 min. A calculated amount of H₂O₂ was added to the sludge, and followed by mixing for 5-10 min. Thereafter the treated sludge was flocculated by addition of different amounts of polymer. The polymer amounts used in the examples are below given as amounts of the polymer products, not as dry solids thereof. The sludge was once again subjected to rapid mixing for about 2 - 5 s. Once flocs were formed, the mixing was stopped. All the conditioned sludge in the beaker was transferred to a Minipress for dewatering. After the Minipress testing was completed, the obtained the sludge cake was retrieved and measurement of the cake dryness (i.e. solids contents) was made by using heating in an oven over night at 105°C. The standard viscosities of the polymers used have been measured at 0.1 weight-% solids content in an aqueous NaCl solution (1 M), at 25°C, using Brookfield DVII T viscometer with UL adapter.

### Sludge 1 (not forming part of the invention):

Undigested sludge from a wastewater treatment plant mainly treating municipal wastewater. The incoming sludge having pH of 6.6 and a solids content of about 3.40 - 5.32 wt%. The polymer used was a high molecular weight cationic polyacrylamide having a standard viscosity of about 2.7-3.4 mPa s. The addition amount of polymer stated in the table below relates to polymer product as such, containing 46% total solids content. The addition amount of H₂O₂ stated in the table below relates to H₂O₂ product as such, having 50% active agent content.

**Table 1:**

| | **Catalyst** | | **H₂O₂ (kg/tDS)** | **Polymer (kg/tDS)** | **Sludge dryness after dewatering (wt %)** |
|---|---|---|---|---|---|
| | | | | | |
| | Dose (kg/tDS) | | | | |
| Ref 1 | 50 | FeCl₃ | 0 | 6 | 36.1 |
| Ex 2 | 34 | FeSO₄ | 34 | 6 | 39.7 |
| Ex 3 | 34 | FeCl₃ | 34 | 6 | 45.5 |
| Ex 4 | 34 | CuCl₂ | 34 | 6 | 43.6 |

| | | | | | |
|---|---|---|---|---|---|
| Ref 1 shows result without H₂O₂. Examples 2, 3 and 4 clearly show an increase in sludge cake dryness compared to the reference sample. | | | | | |

### Sludge 2 (not forming part of the invention):

Undigested sludge from a wastewater treatment plant mainly treating industrial wastewater (mainly printing and dyeing). The incoming sludge having pH of 7.7 and a solids content of 5.62 wt%. The polymer used was a high molecular weight anionic polyacrylamide having a standard viscosity of about 4.7-5.8 mPa·s. The addition amount of polymer stated in the table below relates to polymer product as such, containing 90% total solids content. The addition amount of H₂O₂ stated in the table below relates to H₂O₂ product as such, having 50% active agent content.

**Table 2:**

| | **Catalyst** | | **H₂O₂ (kg/tDS)** | **Polymer (kg/tDS)** | **Sludge dryness after dewatering (wt %)** |
|---|---|---|---|---|---|
| | Dose (kg/tDS) | | | | |
| Ref 5 | 50 | FeCl₃ | 0 | 1.5 | 37.9 |
| Ref 6 | 50 | FeSO₄ | 0 | 1.5 | 36.8 |
| Ex 7 | 30 | FeCl₃ | 30 | 1.5 | 48.1 |
| Ex 8 | 30 | FeCl₃ | 30 | 1.5 | 46.5 |

| | | | | | |
|---|---|---|---|---|---|
| Ref 5 and 6 shows result without H₂O₂. Examples 7 and 8 clearly show an increase in sludge cake dryness compared to the reference samples. The dewatering works very well under higher pH. | | | | | |

### Sludge 3 (not forming part of the invention):

Dewatered sludge from a centrifuge of a wastewater treatment plant mainly treating industrial wastewater (mainly printing and dyeing). The sludge having a solids content of 22.6 wt%. The sludge is then diluted before conducting the testing. The diluted sludge having a solids content of 4.52 wt% and pH of 7.3. The polymer used was a high molecular weight anionic polyacrylamide having a standard viscosity of about 4.7-5.8 mPa·s. The addition amount of polymer stated in the table below relates to polymer product as such, containing 90% total solids. The addition amount of H₂O₂ stated in the table below relates to H₂O₂ product as such, having 50% active agent content.

**Table 3:**

| | **Catalyst** | | **H₂O₂ (kg/tDS)** | **Polymer (kg/tDS)** | **Sludge dryness after dewatering (wt%)** |
|---|---|---|---|---|---|
| | Dose (kg/tDS) | | | | |
| Ref 9 | 50 | FeSO₄ | 0 | 1.5 | 47.2 |
| Ref 10 | 50 | FeCl₃ | 0 | 1.5 | 49.8 |
| Ex 11 | 30 | FeCl₃ | 30 | 1.5 | 52.6 |

| | | | | | |
|---|---|---|---|---|---|
| Ref 9 and 10 shows result without H₂O₂. Example 11 show an increase in sludge cake dryness compared to the reference samples. The dewatering works very well under higher pH. | | | | | |

### Sludge conditioning with radical initiator first

A beaker was provided with 220 g sludge. The sludge was subjected to rapid mixing of about 300 rpm. A calculated amount of radical initiator was added, and followed by mixing for 2 min. A calculated amount of catalyst was added to the sludge, and followed by mixing for 5-10 min. Thereafter the treated sludge was flocculated by addition of different amounts of polymer. The sludge was once again subjected to rapid mixing for about 2 - 5 s. Once flocs were formed, the mixing was stopped. All the conditioned sludge in the beaker was transferred to a Minipress for dewatering. After the Minipress testing was completed, the obtained the sludge cake was retrieved and measurement of the cake dryness (i.e. solids contents) was made by using heating in an oven over night at 105°C.

### Sludge 4:

Undigested sludge from a wastewater treatment plant mainly treating municipal wastewater. The incoming sludge having pH of 6.6 and a solids content of about 3.40 - 5.32 wt%. The radical initiator was sodium persulfate (Na₂S₂O₄, SPS). The polymer used was a high molecular weight cationic polyacrylamide having a standard viscosity of about 2.7-3.4 mPa s. The addition amount of polymer stated in the table below relates to polymer product as such, containing 46% total solids content.

**Table 4:**

| **pH** | **Radical initiator** | | **Catalyst** | | **Polymer (kg/tDS)** | **Sludge dryness after dewatering (wt%)** |
|---|---|---|---|---|---|---|
| | Name | Dose (kg/tDS) | Name | Dose (kg/tDS) | | |
| Ref 12 | | 0 | FeCl₃ | 50 | 6 | 38.0 |
| Ex 13 | SPS | 50 | FeSO₄ | 50 | 6 | 39.4 |
| Ex 14 | SPS | 145 | FeSO₄ | 50 | 6 | 50.3 |
| Ex 15 | SPS | 50 | FeSO₄ | 115 | 6 | 42.4 |
| Ex 16 | SPS | 50 | FeCl₃ | 50 | 6 | 43.5 |
| Ex 17 | SPS | 50 | CuCl₂ | 50 | 6 | 45.2 |

| | | | | | | |
|---|---|---|---|---|---|---|
| Ref 12 shows result without sodium persulfate. Examples 13-17 clearly show an increase in sludge cake dryness compared to the reference samples. Examples 13-16 does not form part of the invention, | | | | | | |

### Sludge 5 (not forming part of the invention):

Undigested sludge from a wastewater treatment plant mainly treating industrial wastewater (mainly printing and dyeing). The sludge having pH of 7.7 and a solids content of 5.62 wt%. The radical initiator was sodium persulfate (Na₂S₂O₄, SPS). The polymer used was a high molecular weight anionic polyacrylamide having a standard viscosity of about 4.7-5.8 mPa·s. The addition amount of polymer stated in the table below relates to polymer product as such, containing 90% total solids content.

**Table 5:**

| | **Radical initiator (kg/tDS)** | **Catalyst** | | **Polymer (kg/tDS)** | **Sludge dryness after dewatering (wt %)** |
|---|---|---|---|---|---|
| | | Name | Dose (kg/tDS) | | |
| Ref 18 | 0 | FeSO₄ | 50 | 1.5 | 36.8 |
| Ref 19 | 0 | FeCl₃ | 50 | 1.5 | 39.8 |
| Ex 20 | 50 | FeSO₄ | 50 | 1.5 | 38.8 |
| Ex 21 | 50 | FeCl₃ | 30 | 1.5 | 44.2 |

| | | | | | |
|---|---|---|---|---|---|
| Ref 18 and 19 shows result without sodium persulfate. Examples 20 and 21 show an increase in sludge cake dryness compared to corresponding reference sample. The dewatering works very well under higher pH. | | | | | |

### Sludge 6 (not forming part of the invention):

Dewatered sludge from a centrifuge of a wastewater treatment plant mainly treating industrial wastewater (mainly printing and dyeing). The sludge having a solids content of 22.6 wt%. The sludge is then diluted before conducting the testing. The diluted sludge having a solids content of 4.52 wt% and pH of 7.3. The radical initiator was sodium persulfate (Na₂S₂O₄, SPS). The polymer used was a high molecular weight anionic polyacrylamide having a standard viscosity of about 4.7-5.8 mPa·s. The addition amount of polymer stated in the table below relates to polymer product as such, containing 90% total solids content.

**Table 6:**

| | **Radical initiator (kg/tDS)** | **Catalyst** | | **Polymer (kg/tDS)** | **Sludge dryness after dewatering (%)** |
|---|---|---|---|---|---|
| | | Name | Dose (kg/tDS) | | |
| Ref 22 | 0 | FeSO₄ | 50 | 1.5 | 47.2 |
| Ref 23 | 0 | FeCl₃ | 50 | 1.5 | 49.8 |
| Ex 24 | 50 | FeSO₄ | 30 | 1.5 | 47.9 |
| Ex 25 | 50 | FeCl₃ | 30 | 1.5 | 50.2 |

| | | | | | |
|---|---|---|---|---|---|
| Ref 22 and 23 shows result without sodium persulfate. Examples 24 and 25 show an increase in sludge cake dryness compared to corresponding reference sample. The dewatering works very well under higher pH. | | | | | |

## Claims

1. A method of treating municipal and/or industrial sludge comprising the steps of:
a) providing the sludge, which has a pH of at least 6;
b) adding a catalyst consisting of a metal salt of copper(II) to said sludge;
c) adding a radical initiator in the form of sodium persulfate to said sludge;
d) adding a polymer to said sludge to provide a chemically treated sludge;
e) dewatering said chemically treated sludge in at least one stage to provide a dewatered sludge cake,
wherein step c) is performed before step b).

2. The method according to claim 1, wherein the metals salts of copper(II) are copper chloride or copper sulfate.

3. The method according to any one of claims 1-2, wherein the catalyst is provided to the sludge in an amount of 10-120 kg per tonne of sludge dry solids (kg/tDS), preferably 20-80 kg/tDS, preferably 30-50 kg/tDS.

4. The method according to any one of claims 1-3, wherein the radical initiator is added to the sludge in an amount of at most 200 kg per tonne of sludge dry solids (kg/tDS), preferably 5-150 kg/tDS.

5. The method according to any one of claims 1-4, wherein the polymer is an anionic, cationic or nonionic polymer; preferably selected from the group polyacrylamide, polyamine, polyDADMAC, melamine formaldehydes, natural polymers, such as tannins and lignin, natural polysaccharides, such as starch, cellulose, hemicellulose alginate, guar gum, pectin, chitin and chitosan, and cationic or anionic derivatives thereof, and any combination thereof.

6. The method according to claim 5, wherein the polyacrylamide has a standard viscosity of at least 2 mPa s, measured at 0.1 weight-% solids content in an aqueous NaCl solution (1 M), at 25°C, using Brookfield DVII T viscometer with UL adapter.

7. The method according to any one of claims 1-6, wherein the polymer is added to the sludge in an amount of 0.5-10 kg per tonne of sludge dry solids (kg/tDS), preferably 0.75-6 kg/tDS, preferably 1-4 kg/tDS, preferably 1-3 kg/tDS.

8. The method according to any one of claims 1-7 further comprising providing a defoamer to the sludge before step d) and after steps b) and c), preferably selected from the groups silicone fluid (polysiloxane) defoamers or modified silicone fluid defoamers or silicone compound defoamers.

9. The method according to any one of claims 1-8, wherein step e) is performed by a separation selected from sedimentation, flotation, pressing, centrifugation and filtration, and any combination thereof, preferably by using a device selected from the group consisting of decanter centrifuge, rotary screen, belt press, filter press, disc filter press, screw press.

10. The method according to any one of claims 1-9, wherein the sludge cake is dewatered until a dry solids content (DS) of at least 30 wt% DS, preferably at least 40 wt% DS, is obtained.

## Patentansprüche

1. Verfahren zur Behandlung von kommunalem und/oder industriellem Schlamm, umfassend die Schritte:
a) Bereitstellen des Schlamms, der einen pH-Wert von mindestens 6 hat;
b) Zugeben eines Katalysators, der aus einem Metallsalz von Kupfer(II) besteht, zu dem Schlamm;
c) Zugeben eines Radikalinitiators in Form von Natriumpersulfat zu dem Schlamm;
d) Zugeben eines Polymers zu dem Schlamm, um einen chemisch behandelten Schlamm bereitzustellen;
e) Entwässern des chemisch behandelten Schlamms in mindestens einer Stufe, um einen entwässerten Schlammkuchen bereitzustellen,
wobei Schritt c) vor Schritt b) durchgeführt wird.

2. Verfahren nach Anspruch 1, wobei die Metallsalze von Kupfer(II) Kupferchlorid oder Kupfersulfat sind.

3. Verfahren nach einem der Ansprüche 1 bis 2, wobei der Katalysator dem Schlamm in einer Menge von 10 bis 120 kg/Tonne Schlammtrockenmasse (kg/tDS), vorzugsweise 20 bis 80 kg/tDS, vorzugsweise 30 bis 50 kg/tDS bereitgestellt wird.

4. Verfahren nach einem der Ansprüche 1 bis 3, wobei der Radikalinitiator dem Schlamm in einer Menge von höchstens 200 kg/Tonne Schlammtrockenmasse (kg/tDS), vorzugsweise 5 bis 150 kg/tDS zugegeben wird.

5. Verfahren nach einem der Ansprüche 1 bis 4, wobei das Polymer ein anionisches, kationisches oder nichtionisches Polymer ist; vorzugsweise ausgewählt aus der Gruppe von Polyacrylamid, Polyamin, PolyDADMAC, Melamin-Formaldehyden, natürlichen Polymeren, wie Tanninen und Lignin, natürlichen Polysacchariden, wie Stärke, Cellulose, Hemicellulosealginat, Guargummi, Pektin, Chitin und Chitosan, und kationischen und anionischen Derivaten davon und jeglicher Kombination davon.

6. Verfahren nach Anspruch 5, wobei das Polyacrylamid eine Standardviskosität von mindestens 2 mPa·s hat, gemessen bei 0,1 Gew.% Feststoffgehalt in einer wässrigen NaCl-Lösung (1 M) bei 25 °C unter Verwendung eines Brookfield DVII T Viskometers mit UL-Adapter.

7. Verfahren nach einem der Ansprüche 1 bis 6, wobei das Polymer dem Schlamm in einer Menge von 0,5 bis 10 kg/Tonne Schlammtrockenmasse (kg/tDS), vorzugsweise 0,75 bis 6 kg/tDS, vorzugsweise 1 bis 4 kg/tDS, vorzugsweise 1 bis 3 kg/tDS bereitgestellt wird.

8. Verfahren nach einem der Ansprüche 1 bis 7, des Weiteren umfassend Bereitstellen eines Entschäumers an den Schlamm vor Schritt d) und nach den Schritten b) und c), wobei der Entschäumer vorzugsweise ausgewählt ist aus der Gruppe der Silikonfluid- (Polysiloxan)-Entschäumer oder modifizierten Silikonfluidentschäumer oder Silikonverbindungsentschäumer.

9. Verfahren nach einem der Ansprüche 1 bis 8, wobei Schritt e) mittels einer Trennung ausgewählt aus Sedimentierung, Flotation, Pressen, Zentrifugieren und Filtration und jedweder Kombination davon durchgeführt wird, vorzugsweise unter Verwendung einer Vorrichtung ausgewählt aus der Gruppe bestehend aus einer Dekanterzentrifuge, einem Rotationssieb, einer Bandpresse, Filterpresse, Scheibenfilterpresse, Schneckenpresse.

10. Verfahren nach einem der Ansprüche 1 bis 9, wobei der Schlammkuchen entwässert wird, bis ein Trockenmassengehalt (DS) von mindestens 30 Gew.% DS, vorzugsweise mindestens 40 Gew.% DS erhalten wird.

## Revendications

1. Procédé de traitement de boues municipales et/ou industrielles comprenant les étapes de :
a) mise à disposition de la boue, qui possède un pH d'au moins 6 ;
b) ajout d'un catalyseur constitué d'un sel métallique de cuivre(II) à ladite boue ;
c) ajout d'un initiateur de radicaux sous la forme de persulfate de sodium à ladite boue ;
d) ajout d'un polymère à ladite boue pour fournir une boue chimiquement traitée ;
e) déshydratation de ladite boue chimiquement traitée en au moins une étape pour fournir un gâteau de boue déshydratée,
l'étape c) étant réalisée avant l'étape b).

2. Procédé selon la revendication 1, les sels métalliques de cuivre(II) étant le chlorure de cuivre ou le sulfate de cuivre.

3. Procédé selon l'une quelconque des revendications 1 et 2, le catalyseur étant fourni à la boue en une quantité de 10 à 120 kg par tonne de solides secs de boue (kg/tDS), préférablement de 20 à 80 kg/tDS, préférablement de 30 à 50 kg/tDS.

4. Procédé selon l'une quelconque des revendications 1 à 3, l'initiateur de radicaux étant ajouté à la boue en une quantité d'au plus 200 kg par tonne de solides secs de boue (kg/tDS), préférablement de 5 à 150 kg/tDS.

5. Procédé selon l'une quelconque des revendications 1 à 4, le polymère étant un polymère anionique, cationique ou non ionique ; préférablement choisi dans le groupe composé par un polyacrylamide, une polyamine, un polyDADMAC, des mélamines formaldéhydes, des polymères naturels, tels que des tanins et une lignine, des polysaccharides naturels, tels qu'un amidon, une cellulose, un alginate d'hémicellulose, gomme de guar, une pectine, une chitine et un chitosane, et des dérivés cationiques ou anioniques correspondants, et une quelconque combinaison correspondante.

6. Procédé selon la revendication 5, le polyacrylamide possédant une viscosité standard d'au moins 2 mPa·s, mesurée à une teneur en solides de 0,1 % en poids dans une solution aqueuse de NaCl (1 M), à 25 °C, en utilisant un viscosimètre Brookfield DVII T doté d'un adaptateur UL.

7. Procédé selon l'une quelconque des revendications 1 à 6, le polymère étant ajouté à la boue en une quantité de 0,5 à 10 kg par tonne de solides secs de boue (kg/tDS), préférablement de 0,75 à 6 kg/tDS, préférablement de 1 à 4 kg/tDS, préférablement de 1 à 3 kg/tDS.

8. Procédé selon l'une quelconque des revendications 1 à 7 comprenant en outre la fourniture d'un agent antimousse à la boue avant l'étape d) et après les étapes b) et c), préférablement choisi dans les groupes composés par des agents antimousses fluides de silicone (polysiloxane) ou des agents antimousses fluides de silicone modifiée ou des agents antimousses à composé de type silicone.

9. Procédé selon l'une quelconque des revendications 1 à 8, l'étape e) étant réalisée par une séparation choisie parmi une sédimentation, une flottation, un pressage, une centrifugation et une filtration, et une quelconque combinaison correspondante, préférablement en utilisant un dispositif choisi dans le groupe constitué par une centrifugeuse de décantation, un tamis rotatif, une presse à bande, une presse à filtre, une presse à filtre à disques, une presse à vis.

10. Procédé selon l'une quelconque des revendications 1 à 9, le gâteau de boue étant déshydraté jusqu'à qu'une teneur en solides secs (DS) d'au moins 30 % en poids de DS, préférablement d'au moins 40 % en poids de DS, soit obtenue.
